# EUROPEAN PATENT SPECIFICATION

(11) **EP 2 509 245 B1**
(45) Date of publication and mention of the grant of the patent: **29.10.2014**
(21) Application number: 11305414.2
(22) Date of filing: 08.04.2011
(51) Int. Cl.: H04L 1/00, H04L 12/24, H04Q 11/04, H04L 12/26, H04L 12/927

(54) **A method and tool for automatically generating a limited set of spectrum and service profiles**
Verfahren und Werkzeug zur automatischen Erzeugung eines begrenzten Satzes and Spektrums- und Dienstprofilen
Procédé et outil permettant de générer automatiquement un ensemble limité de spectres et profils de services

(43) Date of publication of application: 10.10.2012
(73) Proprietor: ALCATEL LUCENT, 92100 Boulogne-Billancourt (FR)
(72) Inventor: Dupuis, Nicolas, 4051 Chaudfontaine (BE); Drooghaag, Benoit, 1421, Ophain-Bois-Seigneur-Isaac (BE)
(74) Representative: ALU Antw Patent Attorneys

(56) References cited:
- EP-A1- 1 995 942
- EP-A1- 2 073 439
- EP-A1- 2 107 734
- MAES J ET AL: "Maximizing digital subscriber line performance", BELL LABS TECHNICAL JOURNAL, WILEY, CA, US, vol. 1, no. 13, 21 March 2008 (2008-03-21) , pages 105-115, XP001512249, ISSN: 1089-7089, DOI: 10.1002/BLTJ.20285

## Description

### Field of the Invention

The present invention generally relates to generating spectrum and service profiles for a telecom operator's network, e.g. a Digital Subscriber Line (DSL) network. Such spectrum and service profile defines the state of the physical links in terms of performances, quality of service, robustness, etc. through a number of parameters such as the maximum bit rate, the target noise margin, the maximum delay allowed and the maximum power spectral density (PSD). The use of a certain spectrum and service profile compared to another one allows preferring one strategic choice versus another, e.g. enhancing stability in trade off against offered bit rate. The invention in particular concerns the automated generation of such spectrum and service profiles.

### Background of the Invention

At present, spectrum and service profiles are generated manually, typically in close collaboration with the operator. The operator's network is investigated for potential sources of performance limitations and for physical layer parameter values that are regularly used in the network. This information is interpreted manually and used to determine in close collaboration with the operator a consistent set of spectrum and service profiles that enables to face the main issues and improve the overall performance.

As a result of uprising new services such as IPTV (Internet Protocol Television), VoD (Video on Demand), and Triple Play services, the management of system performances and customer support become more demanding. Often, the physical layer that transports the information over wired lines up to the end user, is the bottle neck for quality of service. Operators are using a network analyzer to remotely detect and diagnose physical layer problems, and eventually take action to improve performance.

Such network analyzer, like the Alcatel Lucent 5530 NA, typically features a Dynamic Line Manager (DLM) that monitors the line performance and takes action in order to improve performance of a line. The DLM thereto uses the spectrum and service profiles manually generated with collaboration of the operator. In a DSL network for instance, a set of such manually defined spectrum and service profiles is available from a server or in the DSLAMs. The set of spectrum and service profiles is typically constructed offline and stored on a server, e.g. the Dynamic Line Management (DLM) server. After construction, for simplicity of maintenance, the set of profiles is usually pushed into each DSLAM of the network. The set of spectrum and service profiles is consequently the same for all equipment in the DSL network, constructed to face most of the common situations, and consequently used to manage the entire DSL network. The DLM switches between the profiles and chooses the most suitable one for each line.

The human effort in the known method for generating spectrum and service profiles is tremendous: a detailed interpretation and analysis of the existing network data is required, a suitable set of parameter values has to be identified, and a set of spectrum and service profiles has to be determined in collaboration with the operator. As a consequence, the effort and cost for operators and network management system vendors is high.

An additional drawback of the known, manual method for generating spectrum and service profiles is that it tends to result in sub-optimal behaviour because the manual method inherently lacks objectivity. The set of spectrum and service profiles in other words is insufficiently accurate.

The article "Maximizing Digital Subscriber Line Performance" from the authors Jochen Maes et al., published in 2008 in the Bell Labs Technical Journal 13(1),105-116, describes how to select a spectrum and service profile amongst a predefined set of profiles (page 111, right column, second paragraph) in a traditional Dynamic Line Management (DLM) system. This is done using a finite state machine and a limited number of profiles. A set of xDSL spectrum and service profiles is organized hierarchically, e.g. ordered by bit rate and/or INP-delay value. The article from Jochen Maes et al. however does not disclose how this limited number of profiles is determined. It must therefore be assumed that this limited number of profiles is generated in the traditional, manual way, i.e. involving lengthy discussions between the DSL infrastructure manufacturer and the DSL operator. Such manual selection is time consuming, costly and lacks objectivity resulting in sub-optimal behaviour as explained here above.

It is an objective of the present invention to disclose a method and tool for generating spectrum and service profiles that overcomes the above mentioned drawbacks of the known, manual method. More particularly, it is an objective to teach generating spectrum and service profiles in a manner that requires less or no human effort, that is less costly and time consuming for operators and network management system vendors, and that generates more optimal spectrum and service profiles.

### Summary of the Invention

According to the present invention, the above defined objective is realized by a method for automatically generating a limited set of spectrum and service profiles for use in an operator's telecommunication network wherein a spectrum and service profile represents a definition of the state of a physical link comprising one or more of the following link performance parameters:
- a target noise margin;
- a maximum allowable delay;
- a maximum bit rate; and
- a maximum power spectral density,
the method comprising the steps of:
- collecting physical layer parameter values for individual lines, the physical layer parameters comprising one or more of a loop attenuation, a background noise power, an impulse noise level and a transmitted power level;
- determining a set of optimized parameter values of optimized parameters for each one of the individual lines from the physical layer parameters;
- generating a probability density function for each optimized parameter of the optimized parameters from the optimized parameter values determined for multiple lines;
- down-sampling the probability density function for each optimized parameter to thereby restrict the number of spectrum and service profiles in the limited set;
- selecting and combining according to parameter and profile policies a limited set of optimized parameter values; and
- generating the limited set of spectrum and service profiles by cross-combining the limited set of optimized parameter values.

Thus, the invention basically consists in a method that automatically generates a set of optimal spectrum and service profiles by using collected field data from the operator's network. The method consists of a learning phase wherein the probability density functions are estimated for each optimized parameter. Secondly, the parameter value domain is discretized through sampling. In the last step, a set of parameter values is returned that can be embedded into spectrum and service profiles. These parameter values are selected according to parameter policies, e.g. range granularity, etc., as well as profile policies, e.g. the maximum number of profiles, the minimum variation between profiles, etc. The method according to the invention is fully automated. This allows building a more accurate and therefore more optimal set of spectrum and service profiles based on statistics on optimal parameter values. As a result of the automated nature, there is no need for intensive human support in the creation of a set of spectrum and service profiles, which saves effort, time and money.

Probability density functions are usually highly sampled for accuracy reasons. Since the current invention aims at restricting the number of output spectrum and service profiles, down-sampling of the distribution functions is performed.

It is further noticed that the list of link performance parameters for the spectrum and service profiles is not exhaustive and other parameters could become managed as well, for example the minimum bit rate. As will be appreciated by the skilled person, applicability of the present invention is not limited to a particular choice or list of spectrum and service profile parameters.

It is further noticed that also the list of physical layer parameters that are measured for individual lines is non-exhaustive.

Optionally, as defined by claim 2, estimating the probability density function for each optimized parameter comprises determining histograms for each optimized parameter.

Indeed, there exist several methods to achieve estimating the probability density functions of optimized parameters, but histograms give already relevant results.

Further optionally, as defined by claim 3, the sampling step used for down-sampling is determined by a deviation between a current probability density value and a mean probability density value.

Thus, the sampling step between two samples of the probability density functions may be determined in function of the deviation between the current probability density value and the mean probability density value. The sign of the deviation determines if the step size is smaller or larger than the one used in uniform sampling. The amplitude determines the deviation with respect to the uniform one.

According to a further optional aspect defined by claim 4, selecting and combining a set of optimized parameter values may comprise taking all possible cross-combinations of optimized parameter value samples.

Indeed, the outputs of the sampling step may be expressed as vectors containing the different possible values. Profiles are then generated by taking all possible cross-combinations of parameter values.

As is indicated by claim 5, the parameter and profile policies may comprise one or more of the following:
- a range of parameter values (parameter policy);
- a granularity for parameter values (parameter policy);
- a maximum number of profiles (profile policy); and
- a minimum variation between profiles (profile policy).

The list of parameter and profile policies is also non-exhaustive.

In addition to a method for automatically generating a limited set of spectrum and service profiles as defined by claim 1, the current invention also concerns a corresponding tool for automatically generating a limited set of spectrum and service profiles for use in an operator's telecommunication network wherein a spectrum and service profile represents a definition of the state of a physical link comprising one or more of the following link performance parameters:
- a target noise margin;
- a maximum allowable delay;
- a maximum bit rate; and
- a maximum power spectral density,
the tool being defined by claim 6 and comprising:
- means for receiving physical layer parameter values for individual lines, the physical layer parameters comprising one or more of a loop attenuation, a background noise power, an impulse noise level and a transmitted power level;
- means for determining a set of optimized parameter values of optimized parameters for each one of the individual lines from said physical layer parameters;
- means for generating a probability density function for each optimized parameter of the optimized parameters from the optimized parameter values determined for multiple lines;
- means for down-sampling the probability density function for each optimized parameter to thereby restrict the number of spectrum and service profiles in the limited set;
- means for selecting and combining according to parameter and profile policies a limited set of optimized parameter values; and
- means for generating the limited set of spectrum and service profiles by cross-combining the limited set of optimized parameter values.

### Brief Description of the Drawings

Fig. 1 represents a functional block diagram of a Dynamic Line Manager (DLM or 120) containing an embodiment 123 of the tool for generating spectrum and service profiles according to the current invention;
Fig. 2 represents a diagram illustrating an embodiment of the method for generating spectrum and service profiles according to the present invention, executed by the profile database creator 123 of Fig. 1;
Fig. 3 illustrates the effect of line parameter optimization on probability density functions in an embodiment of the method according to the invention;
Fig. 4A and Fig. 4B illustrate the step of estimating probability density functions for two parameters in an embodiment of the method according to the present invention;
Fig. 5 illustrates the step of sampling the probability density functions in an embodiment of the method according to the present invention, using uniform sampling;
Fig. 6 illustrates the step of sampling the probability density functions in an embodiment of the method according to the present invention, using adaptive sampling; and
Fig. 7A and Fig. 7B illustrate adaptive sampling applied to the probability density functions of Fig. 4A and Fig. 4B.

### Detailed Description of Embodiment(s)

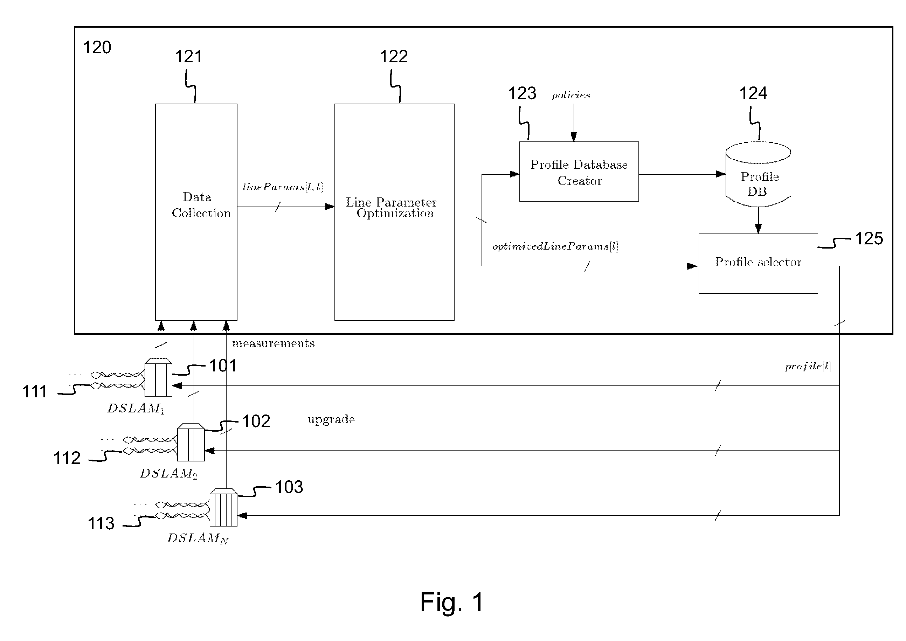

Fig.1 illustrates the optimization process performed by the Dynamic Line Manager 120 to enhance the performance of the lines of an entire DSL network represented in Fig. 1 by DSLAMs 101, 102 and 103, and DSL lines 111, 112 and 113.

When using a network analyzer it is possible to massively collect physical data from the DSLAMs spread in the entire operator's DSL network. By monitoring the physical state of individual DSL lines, line parameter values like the transmitted power, the loop attenuation, the background noise power and the impulse noise level can be collected. Obviously, the just mentioned line parameters are exemplary as more or other parameters could be monitored. These measured data are collected by or handed over to the data collection unit 121 in DLM 120.

The line parameter optimization unit 122 thereupon determines the optimal value of several modem parameters, for example the maximum PSD downstream, the actual delay downstream, the maximum bit rate downstream and the target noise margin downstream, for given individual lines in the operator's network.

In summary, it is assumed that a collection of physical layer parameters, such as the loop attenuation, transmitted power, etc., is measured, and some line state estimators, such as background noise estimators or impulse noise estimators, have been performed. According to these values, an optimized set of modem parameter values is returned for a given individual line. This optimization process for physical layer parameter values is repeated over all individual lines of the entire network, as a result of which statistical techniques become relevant to learn the most probable values present in the network and the distributions of optimal parameter values.

These statistical techniques are applied by the profile database generator 123 which processes the optimal parameter values from multiple lines, generates probability density functions and selects parameter values for a limited set of profiles. The profile database creator 123 in other words represents an embodiment of the tool for automatically generating a limited set of optimized spectrum and service profiles in accordance with the principles of the current invention.

The generated spectrum and service profiles are stored in a profile database 124 and a profile selector 125 selects for each line of an entire network or part of a network the most suitable spectrum and service profile(s) from the limited set stored in the database 124 corresponding to the optimal parameters.

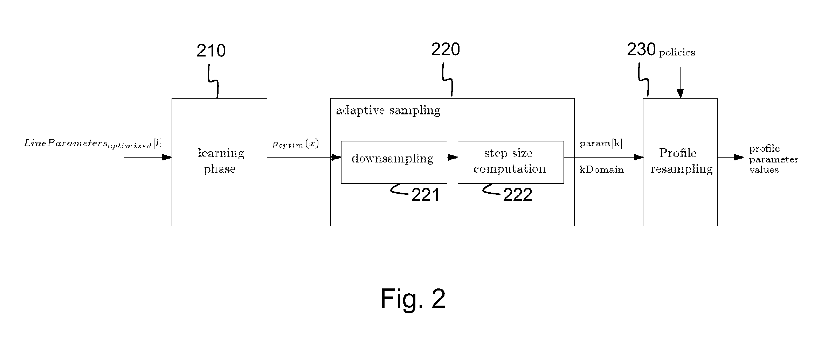

Fig. 2 shows in more detail the different steps in the automatic profile database creation process that is applied by profile database creator 123. In the learning phase 210, the profile database generator 123 generates probability density functions pₒₚₜᵢₘ(x) from the optimized parameter values for individual lines, LineParameters_{optimized}[I]. An estimation of the probability density functions pₒₚₜᵢₘ(x), is carried out for each optimized parameter. There are several possible methods to achieve this task but histograms give already relevant results. In the adaptive sampling phase 220, these probability density functions pₒₚₜᵢₘ(x) are downsampled in step 221 and the sample step size is adaptively adjusted in step 222. At last, parameter policies and profile policies are used in the profile resampling phase 230 to select the parameter values that will be combined to form a limited set of spectrum and service profiles.

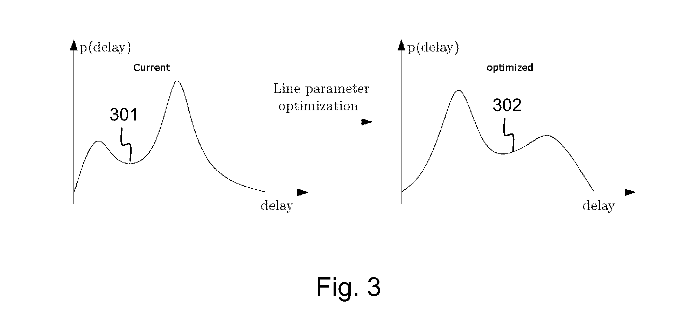

The effect of the line parameter optimization 122 on the probability density of a given parameter, e.g. the delay, is illustrated by Fig. 3. Herein, the change of values in the probability densities of the delay, from the actual modem parameters 301 to the optimized ones 302, is shown. The adaptive building of optimized profiles will be performed directly on such probability densities of optimized parameter values.

The purpose of the method according to the present invention is to create a set of spectrum and service profiles that matches as much as possible the optimized distributions, e.g. 302, in order to provide the most suitable sampling of them. Since the number of profiles which can be entered in DSLAM's is limited and since these profiles must be easily understood and maintained, only a limited number of profiles must be used.

Choosing a uniform sampling between profile parameter values usually does not allow choosing the best-fit profile for a given line, and does not tend to reach a limited, optimal set of profiles for the entire network. At network-wide scale, there will be more lines closer to optimal profiles as a result of the current invention, delivering an overall benefit.

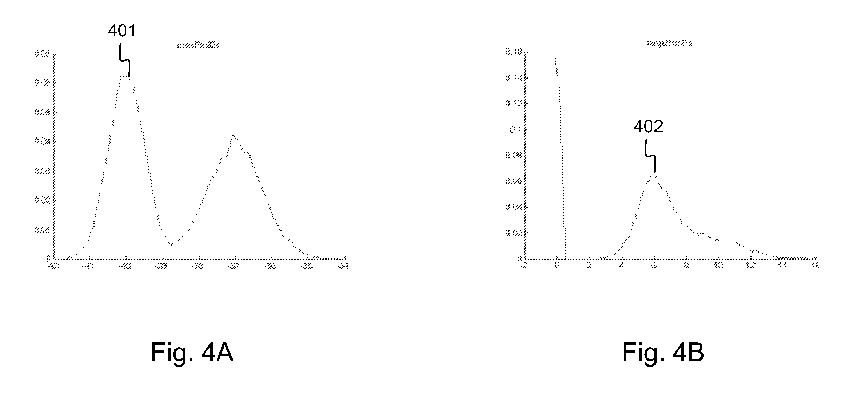

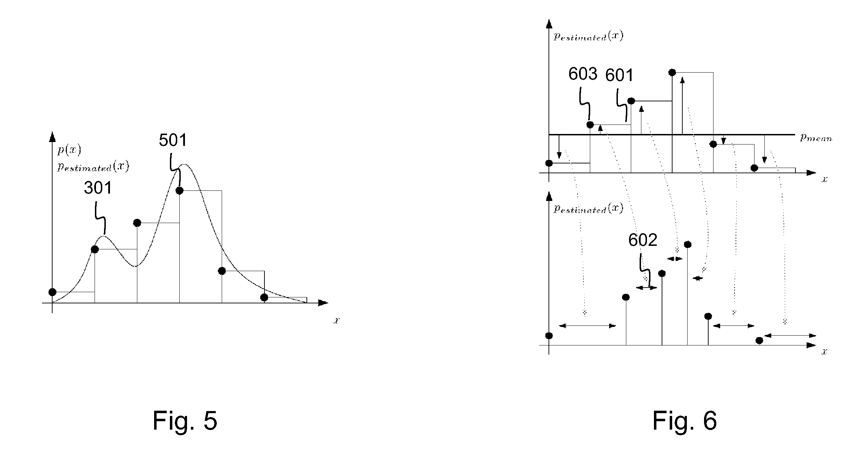

Fig. 4A shows the probability density function 401 or maxPsdDs obtained for the optimized maximum Power Spectral Density values of multiple lines in the DSL network of Fig. 1. Similarly, Fig. 4B shows the probability density function 402 or targetNoiseMarginDs obtained for the optimized target noise margin values values of multiple lines in the DSL network of Fig. 1. Choosing a uniform sampling for the optimal maximum PSD downstream and the optimal target noise margin, for example:
optimal maxPsdDs = [-42 -41 -40 -39 -38 -37 -36]; and
optimal targetNmDs = [1 3 5 7 9 11],
is not the most advantageous. Almost no maxPsdDs value of -39 dBm/Hz are optimal for the current field operator, neither target noise margin values of 1 dB. By contrast, 6 dB noise margins are usually optimal, as seen in the probability density function 402. Not providing the possibility to use such values would inevitably imply a lack of optimality. Downsampling a probability density function with uniform sampling step is illustrated by Fig. 5 for the probability density function 301.

In the sampling phase 220 of the embodiment illustrated by Fig. 2, the computation of an adaptive sampling is done, more precisely the discretization of the parameter value domain using a continuously adjustable sampling rate. This can be achieved by a down-sampling step 221 followed by a step size computation 222. As probability density functions are usually highly sampled for accuracy reasons, down-sampling of such distributions enables to limit the number of output profiles.

In step 222, the sampling step size between two samples is determined by the deviation between the current probability density value with respect to the mean probability density value pₘₑₐₙ. The sign of the deviation determines if the step size is smaller or larger than the one used in uniform sampling. The amplitude determines the deviation with respect to the uniform one. This is illustrated by Fig. 6 where the sampling step 601 in the uniform sampling is for instance shrunk to the sampling step 602 as a result of a corresponding deviation of the current probability density value 603 from the mean probability density value pₘₑₐₙ.

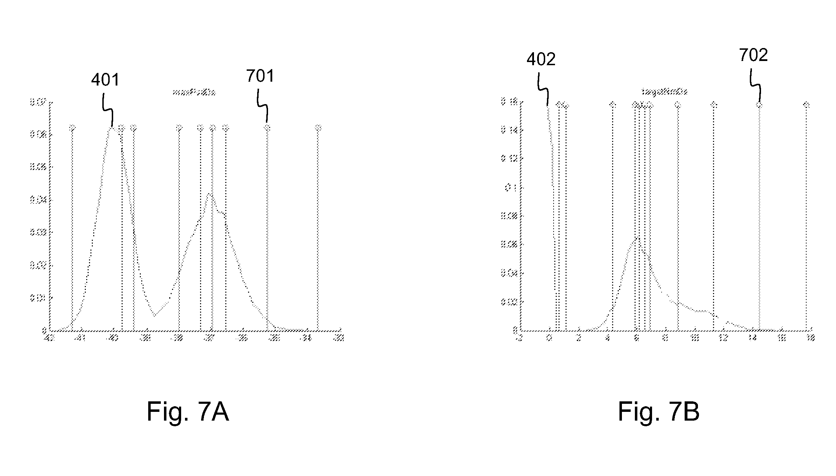

Fig. 7A illustrates adaptive sampling 701 for the maxPsdDs probability density function 401. Fig. 7B illustrates adaptive sampling 702 for the targetNoiseMarginDs probability density function 402.

In this profile resampling phase 230, a set of parameter values that can be embedded into profiles is selected. The profile database creator 123 thereto uses parameter policies, e.g. the range, granularity, etc., as well as profile policies, e.g. the maximum number of profiles, the minimum variation between profiles, etc.

The outputs of the resampling phase 230 can be expressed as vectors containing the different possible values. The profiles are thus generated by taking all the possible cross-combinations between the value, e.g.:
- maxPsdDs = [-42 -39 -36];
- actualDelayDs = [3.5 6 6.5 8 10.5];
- maxBitrateDs = [6000 7500 8000 8500 9500]; and
- targetNmDs = [1 6.5 11.5].

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for automatically generating a limited set of spectrum and service profiles for use in an operator's telecommunication network wherein a spectrum and service profile represents a definition of the state of a physical link comprising one or more of the following link performance parameters:
- a target noise margin;
- a maximum allowable delay;
- a maximum bit rate; and
- a maximum power spectral density,
said method comprising:
- collecting physical layer parameter values for individual lines (111; 112; 113), said physical layer parameters comprising one or more of a loop attenuation, a background noise power, an impulse noise level and a transmitted power level;
- determining a set of optimized parameter values (LineParameters_{optimized}[I]) of optimized parameters for each one of said individual lines (111; 112; 113) from said physical layer parameters;
- generating a probability density function (pₒₚₜᵢₘ(x)) for each optimized parameter of said optimized parameters from said optimized parameter values determined for multiple lines;
- down-sampling said probability density function (pₒₚₜᵢₘ(x)) for each optimized parameter to thereby restrict the number of spectrum and service profiles in said limited set;
- selecting and combining according to parameter and profile policies (policies) a limited set of optimized parameter values; and
- generating said limited set of spectrum and service profiles by cross-combining said limited set of optimized parameter values.

2. A method according to claim 1, wherein estimating said probability density function (pₒₚₜᵢₘ(x)) for each optimized parameter comprises determining histograms for each optimized parameter.

3. A method according to claim 1, wherein a sampling step used for said down-sampling is determined by a deviation between a current probability density value and a mean probability density value.

4. A method according to claim 1, wherein selecting and combining a set of optimized parameter values comprises taking all possible cross-combinations of optimized parameter value samples.

5. A method according to claim 1, wherein said parameter and profile policies comprise one or more of:
- a range of parameter values;
- a granularity for parameter values;
- a maximum number of profiles; and
- a minimum variation between profiles.

6. A tool for automatically generating a limited set of spectrum and service profiles for use in an operator's telecommunication network wherein a spectrum and service profile represents a definition of the state of a physical link comprising one or more of the following link performance parameters:
- a target noise margin;
- a maximum allowable delay;
- a maximum bit rate; and
- a maximum power spectral density,
said tool comprising:
- means (121) for receiving physical layer parameter values for individual lines (111, 112, 113) said physical layer parameters comprising one or more of a loop attenuation, a background noise power, an impulse noise level and a transmitted power level;
- means (122) for determining a set of optimized parameter values of optimized parameters for each one of said individual lines (111, 112, 113) from said physical layer parameters;
- means (210) for generating a probability density function for each optimized parameter of said optimized parameters from said optimized parameter values determined for multiple lines;
- means (220) for down-sampling said probability density function for each optimized parameter to thereby restrict the number of spectrum and service profiles in said limited set;
- means (230) for selecting and combining according to parameter and profile policies a limited set of optimized parameter values; and
- means for generating said limited set of spectrum and service profiles (profile parameter values) by cross-combining said limited set of optimized parameter values.

## Patentansprüche

1. Verfahren zur automatischen Erzeugung eines begrenzten Satzes von Spektrums- und Dienstprofilen für die Verwendung im Telekommunikationsnetzwerk eines Betreibers, wobei ein Spektrums- und Dienstprofil eine Definition des Zustands einer physischen Verbindung einschließlich eines oder mehrerer der folgenden Verbindungsleistungsparameter darstellt:
- Ein Ziel-Rauschabstand;
- eine maximal zulässige Verzögerung;
- eine maximale Bitrate; und
- eine maximale Leistungsspektraldichte,
wobei das besagte Verfahren umfasst:
- Erfassen der Parameterwerte der Bitübertragungsschicht für einzelne Leitungen (111; 112; 113), wobei die besagten Parameter der Bitübertragungsschicht einen oder mehrere der folgenden Parameter umfassen: Schleifendämpfung, Hintergrundrauschleistung, Impulsrauschpegel und Sendeleistungspegel;
- Ermitteln eines Satzes von optimierten Parameterwerten (LineParameters_{optimized}[I]) von optimierten Parametern für eine jede der besagten einzelnen Leitungen (111; 112; 113) aus den besagten Parametern der Bitübertragungsschicht;
- Erzeugen einer Wahrscheinlichkeitsdichtefunktion (pₒₚₜᵢₘ(x)) für jeden optimierten Parameter der besagten optimierten Parameter aus den besagten für mehrfache Leitungen ermittelten optimierten Parameterwerten;
- Abwärtstasten der besagten Wahrscheinlichkeitsdichtefunktion (pₒₚₜᵢₘ(x)) für jeden optimierten Parameter, um dadurch die Anzahl der Spektrums- und Dienstprofile in dem besagten begrenzten Satz einzuschränken;
- Auswählen und Kombinieren eines begrenzten Satzes von optimierten Parameterwerten gemäß Parameter- und Profilrichtlinien (policies), und
- Erzeugen des besagten begrenzten Satzes von Spektrums- und Dienstprofilen durch Querkombinieren des besagten begrenzten Satzes von optimierten Parameterwerten.

2. Verfahren nach Anspruch 1, wobei das Schätzen der besagten Wahrscheinlichkeitsdichtefunktion (pₒₚₜᵢₘ(x)) für jeden optimierten Parameter das Bestimmen eines Histogramms für jeden optimierten Parameter umfasst.

3. Verfahren nach Anspruch 1, wobei ein für die besagte Abwärtstastung verwendete Schritt des Abtastens durch eine Abweichung zwischen einem momentanen Wahrscheinlichkeitsdichtewerte und einem mittleren Wahrscheinlichkeitsdichtewert bestimmt wird.

4. Verfahren nach Anspruch 1, wobei das Auswählen und Kombinieren eines Satzes von optimierten Parameterwerten das Einbeziehen aller möglichen Querkombinationen von optimierten Parameterwertabtastungen umfasst.

5. Verfahren nach Anspruch 1, wobei die besagten Parameter- und Profilrichtilinien eine oder mehrere der folgenden umfassen:
- Einen Parameterwertebereich;
- eine Granularität der Parameterwerte;
- eine maximale Anzahl von Profilen; und
- eine Mindestabweichung zwischen Profilen.

6. Werkzeug für die automatische Erzeugung eines begrenzten Satzes von Spektrums- und Dienstprofilen zur Verwendung im Telekommunikationsnetzwerk eines Betreibers, wobei ein Spektrums- und Dienstprofil eine Definition des Zustands einer physischen Verbindung einschließlich eines oder mehrerer der folgenden Verbindungsleistungsparameter darstellt:
- Ein Ziel-Rauschabstand;
- eine maximal zulässige Verzögerung;
- eine maximale Bitrate; und
- eine maximale Leistungsspektraldichte,
wobei das besagte Werkzeug umfasst:
- Mittel (121) zum Empfangen von Parameterwerten der Bitübertragungsschicht für einzelne Leitungen (111; 112; 113), wobei die besagten Parameter der Bitübertragungsschicht einen oder mehrere der folgenden Parameter umfassen: Schleifendämpfung, Hintergrundrauschleistung, Impulsrauschpegel und Sendeleistungspegel;
- Mittel (122) zum Ermitteln eines Satzes von optimierten Parameterwerten von optimierten Parametern für eine jede der besagten einzelnen Leitungen (111; 112; 113) aus den besagten Parametern der Bitübertragungsschicht;
- Mittel (210) zum Erzeugen einer Wahrscheinlichkeitsdichtefunktion für jeden optimierten Parameter der besagten optimierten Parameter aus den besagten für mehrfache Leitungen ermittelten optimierten Parameterwerten;
- Mittel (220) zum Abwärtstasten der besagten Wahrscheinlichkeitsdichtefunktion für jeden optimierten Parameter, um dadurch die Anzahl der Spektrums- und Dienstprofile in dem besagten begrenzten Satz einzuschränken;
- Mittel (230) zum Auswählen und Kombinieren eines begrenzten Satzes von optimierten Parameterwerten gemäß Parameter- und Profilrichtlinien, und
- Mittel zum Erzeugen des besagten begrenzten Satzes von Spektrums- und Dienstprofilen (Profilparameterwerte) durch Querkombinieren des besagten begrenzten Satzes von optimierten Parameterwerten.

## Revendications

1. Procédé pour générer automatiquement un ensemble limité de profils de spectres et de services destinés à être utilisés dans le réseau de télécommunication d'un opérateur dans lequel un profil de spectres et de services représente une définition de l'état d'une liaison physique comprenant un ou plusieurs des paramètres de performances de liaison suivants :
- une marge de bruit cible ;
- un retard admissible maximum ;
- un débit binaire maximum ; et
- une densité spectrale de puissance maximale,
ledit procédé comprenant les étapes suivantes :
- collecter des valeurs de paramètres de couche physique pour des lignes individuelles (111 ; 112 ; 113), lesdits paramètres de couche physique comprenant un ou plusieurs éléments parmi une atténuation de boucle, une puissance du bruit de fond, un niveau de bruit impulsif et un niveau de puissance transmise ;
- déterminer un ensemble de valeurs de paramètres optimisés (LineParameters_{optimized}[I]) parmi des paramètres optimisés pour chacune desdites lignes individuelles (111 ; 112 ; 113) à partir desdits paramètres de couche physique ;
- générer une fonction de densité de probabilité (pₒₚₜᵢₘ(x)) pour chaque paramètre optimisé parmi lesdits paramètres optimisés à partir desdites valeurs de paramètres optimisés déterminées pour des lignes multiples ;
- sous-échantillonner ladite fonction de densité de probabilité (pₒₚₜᵢₘ(x)) pour chaque paramètre optimisé afin de limiter le nombre de profils de spectres et de services dans ledit ensemble limité ;
- sélectionner et combiner en fonction des politiques de paramètres et de profils (politiques) un ensemble limité de valeurs de paramètres optimisés ; et
- générer ledit ensemble limité de profils de spectres et de services par combinaison croisée dudit ensemble limité de valeurs de paramètres optimisés.

2. Procédé selon la revendication 1, dans lequel l'estimation de ladite fonction de densité de probabilité (pₒₚₜᵢₘ(x)) pour chaque paramètre optimisé comprend la détermination d'histogrammes pour chaque paramètre optimisé.

3. Procédé selon la revendication 1, dans lequel une étape d'échantillonnage utilisée pour ledit sous-échantillonnage est déterminée par un écart entre une valeur de la densité de probabilité actuelle et une valeur de la densité de probabilité moyenne.

4. Procédé selon la revendication 1, dans lequel la sélection et la combinaison d'un ensemble de valeurs de paramètres optimisés consistent à prendre toutes les combinaisons croisées possibles d'échantillons de valeurs de paramètres optimisés.

5. Procédé selon la revendication 1, dans lequel lesdites politiques de paramètres et de profils comprennent un ou plusieurs des éléments suivants :
- une plage de valeurs de paramètres ;
- une granularité des valeurs de paramètres ;
- un nombre maximum de profils ; et
- une variation minimum entre profils.

6. Outil pour générer automatiquement un ensemble limité de profils de spectres et de services destinés à être utilisés dans le réseau de télécommunication d'un opérateur dans lequel un profil de spectres et de services représente une définition de l'état d'une liaison physique comprenant un ou plusieurs des paramètres de performances de liaison suivants :
- une marge de bruit cible ;
- un retard admissible maximum ;
- un débit binaire maximum ; et
- une densité spectrale de puissance maximale,
ledit outil comprenant :
- des moyens (121) pour recevoir des valeurs de paramètres de couche physique pour des lignes individuelles (111 ; 112 ; 113), lesdits paramètres de couche physique comprenant un ou plusieurs éléments parmi une atténuation de boucle, une puissance du bruit de fond, un niveau de bruit impulsif et un niveau de puissance transmise ;
- des moyens (122) pour déterminer un ensemble de valeurs de paramètres optimisés parmi des paramètres optimisés pour chacune desdites lignes individuelles (111 ; 112 ; 113) à partir desdits paramètres de couche physique ;
- des moyens (210) pour générer une fonction de densité de probabilité pour chaque paramètre optimisé parmi lesdits paramètres optimisés à partir desdites valeurs de paramètres optimisés déterminées pour des lignes multiples ;
- des moyens (220) pour sous-échantillonner ladite fonction de densité de probabilité pour chaque paramètre optimisé afin de limiter le nombre de profils de spectres et de services dans ledit ensemble limité ;
- des moyens (230) pour sélectionner et combiner en fonction des politiques de paramètres et de profils un ensemble limité de valeurs de paramètres optimisés ; et
- des moyens pour générer ledit ensemble limité de profils de spectres et de services (valeurs de paramètres de profils) par combinaison croisée dudit ensemble limité de valeurs de paramètres optimisés.
